# EUROPEAN PATENT APPLICATION

(11) **EP 4 502 658 A1**
(43) Date of publication of application: **05.02.2025**
(21) Application number: 23779929.1
(22) Date of filing: 22.03.2023
(51) Int. Cl.: G01S 17/42, G01S 17/894, G01S 17/93

(54) **RANGING DEVICE AND RANGING METHOD**

(30) Priority: 31.03.2022 JP 2022059679
(71) Applicant: Sony Semiconductor Solutions Corporation, Atsugi-shi, Kanagawa 243-0014 (JP)
(72) Inventor: SUZUKI Shunpei, Atsugi-shi, Kanagawa 243-0014 (JP); YOKOYAMA Takuya, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/011151
(87) International publication number: WO 2023/189917

(57) **Abstract**

[Object]

Degradation of the object position detection accuracy is prevented, and it is made possible to suppress the power consumption.

[Solving Means]

A distance measuring instrument includes a light emitting section that periodically emits a light pulse signal, a light scanning section that performs scanning with the light pulse signal within a predetermined angle range, a scanning speed detection section that detects a scanning speed of the light scanning section, a determination section that determines whether or not the scanning speed has exceeded a predetermined threshold value, and a control section that controls the number of times by which the light pulse signal is to be emitted from the light emitting section during a scanning period of the light scanning section, in reference to a result of the determination by the determination section.

## Description

### [Technical Field]

The present disclosure relates to a distance measuring instrument and a distance measuring method.

### [Background Art]

A mechanical LiDAR (Light Detection And Ranging) apparatus that can be used for automatic driving and so forth is known. The mechanical LiDAR apparatus includes a light scanning section that performs scanning with a light pulse signal emitted from a light emitting section. For example, a polygon mirror is used for the light scanning section (refer to PTL 1).

The polygon mirror can be used for scanning with a light pulse signal emitted from the light emitting section, in a predetermined direction. By the polygon mirror used for scanning with a light pulse signal, the scanning range can be increased, and the distance of an object positioned within a wide range can be measured.

### [Citation List]

### [Patent Literature]

[PTL 1]
Japanese Patent Laid-open No. 2021-148477

### [Summary]

### [Technical Problem]

In the mechanical LiDAR, the light emitting section emits a light pulse signal by a predetermined number of times for each one scanning unit of the polygon mirror, and the distance and the angle of the object are measured in reference to a result obtained when reception of the reflection light pulse signal is performed repeatedly.

The polygon mirror includes a mechanical mechanism section that rotates a mirror member for reflecting a light pulse signal around a rotation shaft. Since the rotation shaft is driven to rotate by a motor, there is a possibility that the rotational speed of the rotation shaft may be fluctuated irregularly by jitter. If the rotational speed of the rotation shaft of the polygon mirror is fluctuated, then a displacement appears between a processing angle of the LiDAR and an actual mirror angle, resulting in degradation in object position detection accuracy.

Further, in order to solve the problem described above, a method of changing light emission and light reception timings according to jitter of a rotation shaft corresponding to the rotational speed of a polygon mirror is available. However, in this case, if the rotational speed of the rotation shaft of the polygon mirror is fluctuated by jitter, the scanning period is also fluctuated, and the interval at which the light emitting section emits a light pulse signal is fluctuated. For example, if the rotational speed of the rotation shaft of the polygon mirror is made higher than an assumed value by jitter, then the scanning period decreases, and the interval at which the light emitting section emits a light pulse signal becomes shorter. If the light emission interval of the light emitting section becomes shorter, the power consumption in the light emitting section increases. In the light emitting section, an upper limit of the power consumption is determined in advance, and, in some cases, there is a possibility that, due to the rotational speed of the rotation shaft of the polygon mirror being fluctuated by jitter, the power consumption of the light emitting section may reach the upper limit to cause such failures that the life of the light emitting section reduces and a light emission characteristic becomes instable.

Therefore, the present disclosure provides a distance measuring instrument that can prevent degradation in object position detection accuracy and can suppress the power consumption.

### [Solution to Problem]

In order to solve the problem described above, according to the present disclosure, there is provided a distance measuring instrument including a light emitting section that periodically emits a light pulse signal, a light scanning section that performs scanning with the light pulse signal within a predetermined angle range, a scanning speed detection section that detects a scanning speed of the light scanning section, a determination section that determines whether or not the scanning speed has exceeded a predetermined threshold value, and a control section that controls the number of times by which the light pulse signal is to be emitted from the light emitting section during a scanning period of the light scanning section, in reference to a result of the determination by the determination section.

In a case where it is determined that the scanning speed has exceeded the threshold value, the control section may decrease the number of times by which the light pulse signal is to be emitted from the light emitting section during a scanning period of the light scanning section from a reference number of times.

The distance measuring instrument may be configured such that the light scanning section includes a rotation mirror member that performs scanning with the light pulse signal in an angular direction that depends on a rotational angle, the scanning speed detection section detects a rotational speed of the rotation mirror member, the determination section determines whether or not the rotational speed has exceeded the predetermined threshold value, and the control section makes, if it is determined that the rotational speed has exceeded the threshold value, the number of times by which the light pulse signal is emitted while the rotation mirror member rotates once smaller than the reference number of times.

The rotation mirror member may include a rotatable mirror, a rotation shaft of the rotatable mirror, and a motor for driving the rotation shaft to rotate, and the scanning speed detection section may detect the rotational speed of the rotation shaft.

The scanning speed detection section may include an encoder that detects the rotational speed of the rotation shaft.

The light emitting section may include a plurality of light emitting elements arranged along a predetermined direction, the plurality of light emitting elements may sequentially emit the light pulse signal one by one at different times, and the control section may control, in reference to a result of the determination by the determination section, the number of times by which the plurality of light emitting elements repeat an operation of sequentially emitting the light pulse signal one by one at different times during a scanning period of the light scanning section.

The plurality of light emitting elements may be arranged along a first direction, the light scanning section may perform scanning with the light pulse signal in a second direction crossing with the first direction, the light emitting section may cause the plurality of light emitting elements to emit light a plurality of number of times every time the light scanning section performs scanning with the light pulse signal by one unit in the second direction, and the control section may control, in reference to a result of the determination by the determination section, the number of times by which, every time the light scanning section performs scanning with the light pulse signal by one unit in the second direction, the light emitting section causes the plurality of light emitting elements to emit light.

The light emitting section may include a plurality of light emitting elements arranged along a predetermined direction, the plurality of light emitting elements may emit the light pulse signal at the same timing, and the control section may control, in reference to a result of the determination by the determination section, the number of times by which the plurality of light emitting elements repeat an operation of emitting the light pulse signal during a scanning period of the light scanning section.

The control section may control the number of times by which the light emitting section emits the light pulse signal during a scanning period of the light scanning section, such that power consumption of the light emitting section does not exceed an allowable power value determined in advance.

The light scanning section may include a mechanical section in which the scanning speed of the light pulse signal is fluctuated by jitter.

The distance measuring instrument according to claim 10, in which the light scanning section is a polygon mirror or a MEMS (Micro Electro Mechanical System) mirror.

The distance measuring instrument according to claim 1, further including a light receiving section that receives a reflection light pulse signal reflected by an object that is irradiated by the light pulse signal, and a distance measurement section that measures the distance to the object according to a time difference between a light reception timing of the reflection light pulse signal received by the reception section and a light emission timing of the light pulse signal emitted from the light emitting section.

The control section may control the light emission timing of the light pulse signal to be emitted from the light emitting section, in reference to a result of the determination by the determination section.

If it is determined by the determination section that the scanning speed has exceeded the predetermined threshold value, the control section may adjust the light emission timing of the light pulse signal depending on the scanning speed of the light scanning section and make the number of times by which the light pulse signal is to be emitted from the light emitting section during a scanning period of the light scanning section smaller than a reference number of times.

A distance measuring method including scanning, by a light scanning section, with a light pulse signal emitted periodically from a light emitting section, within a predetermined angular range, detecting a scanning speed of the light scanning section, determining whether or not the scanning speed has exceeded a predetermined threshold value, and controlling the number of times by which the light pulse signal is to be emitted from the light emitting section during a scanning period of the light scanning section, in reference to a result of determining whether or not the scanning speed has exceeded a predetermined threshold value.

### [Brief Description of Drawings]

[FIG. 1]

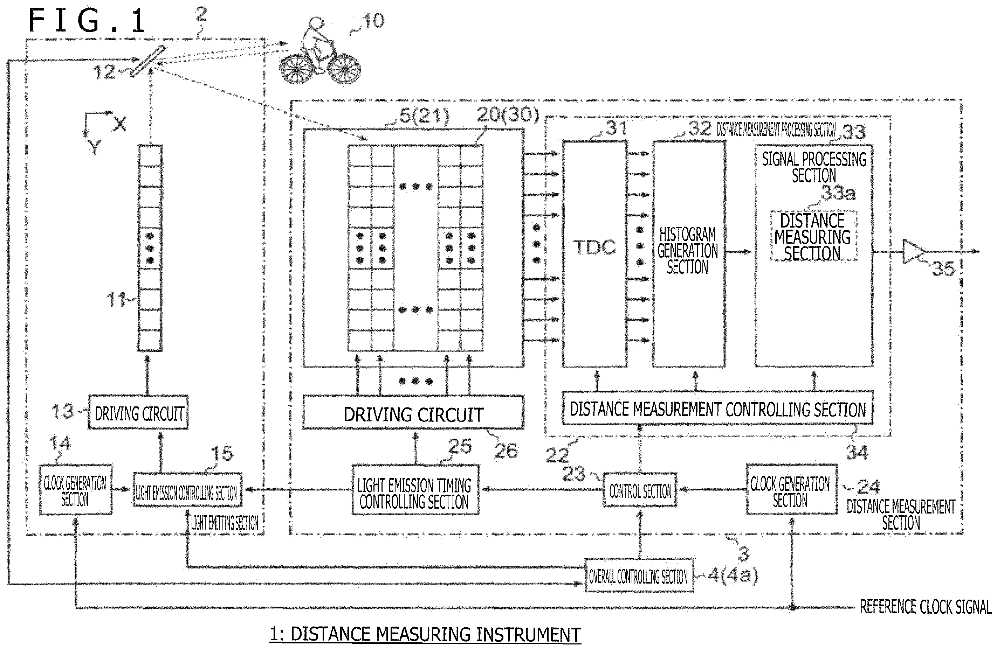

   FIG. 1 is a block diagram depicting a general configuration of a distance measuring instrument according to an embodiment.
[FIG. 2]

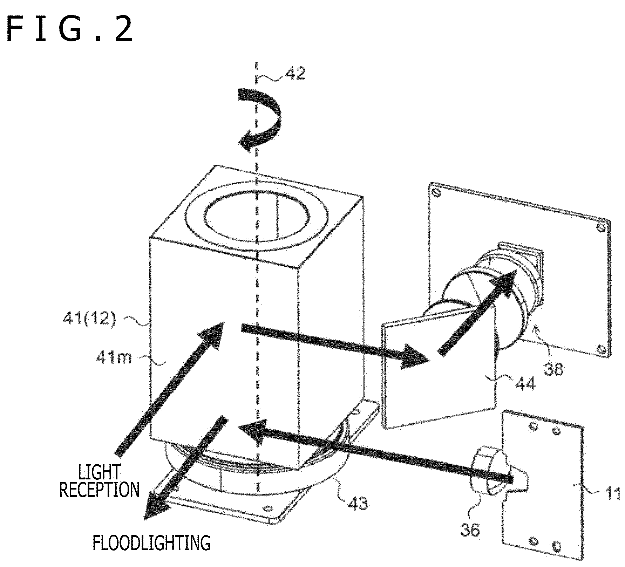

   FIG. 2 is a perspective view depicting an example of a specific configuration of a light emitting section, a light scanning section, and a light receiving section.
[FIG. 3]

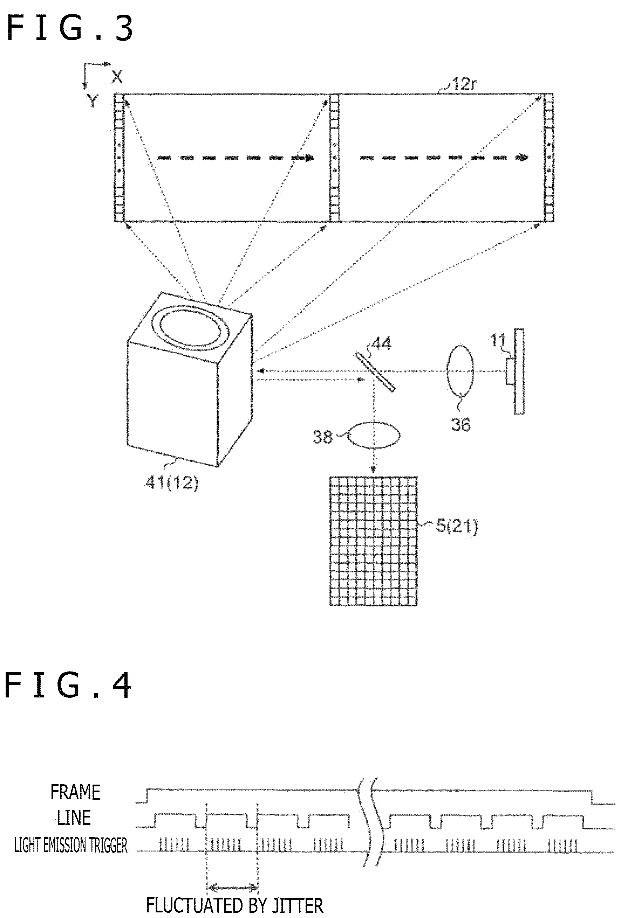

   FIG. 3 is a view schematically depicting a scanning range of the light scanning section.
[FIG. 4]
   FIG. 4 is a timing chart depicting a light emission timing of the light emitting section.
[FIG. 5]

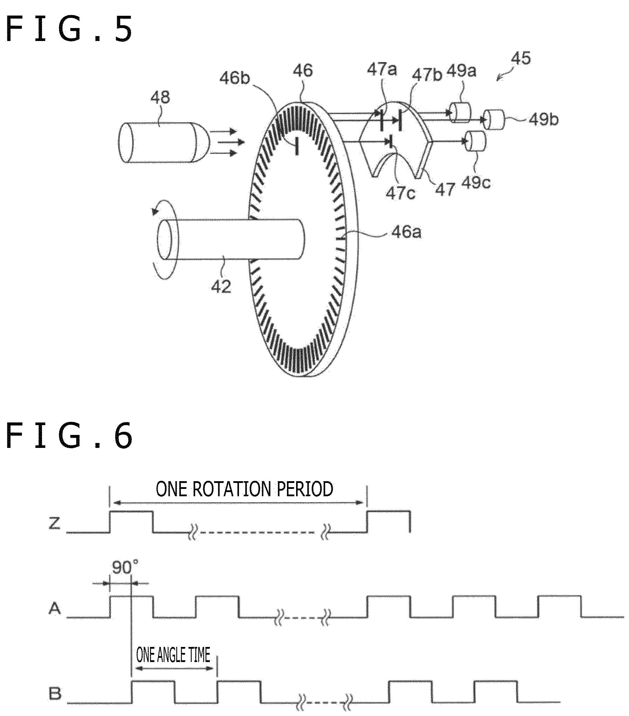

   FIG. 5 is a perspective view depicting a structure of an encoder for detecting a rotational speed of a polygon mirror.
[FIG. 6]
   FIG. 6 is a timing chart of a detection signal that depends on light reception signals of first to third light receiving elements.
[FIG. 7]

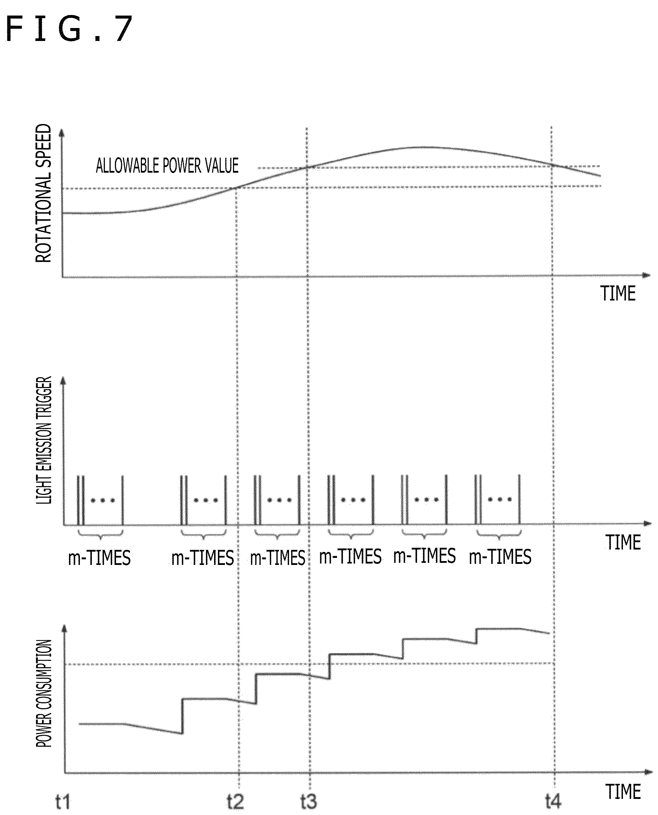

   FIG. 7 is a diagram depicting a relation between a rotational speed of the polygon mirror, a light emission trigger signal, and power consumption of the light emitting section.
[FIG. 8]

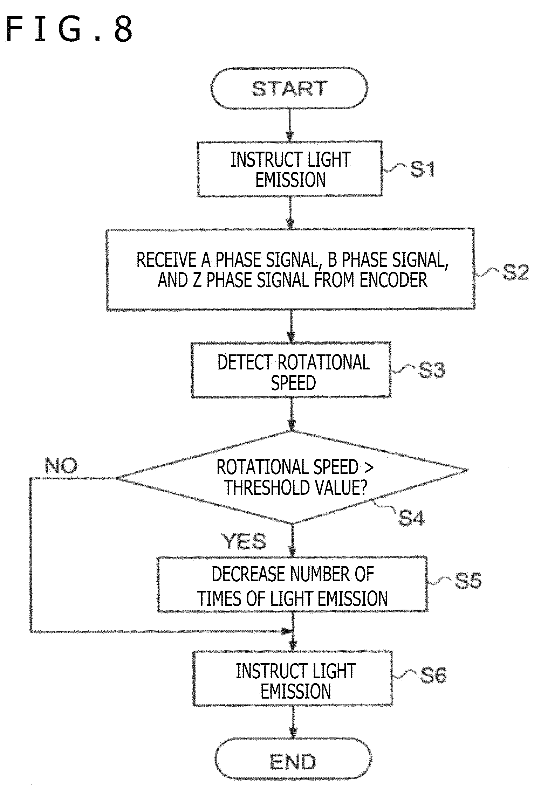

   FIG. 8 is a flow chart depicting a processing operation of an overall controlling section.
[FIG. 9]

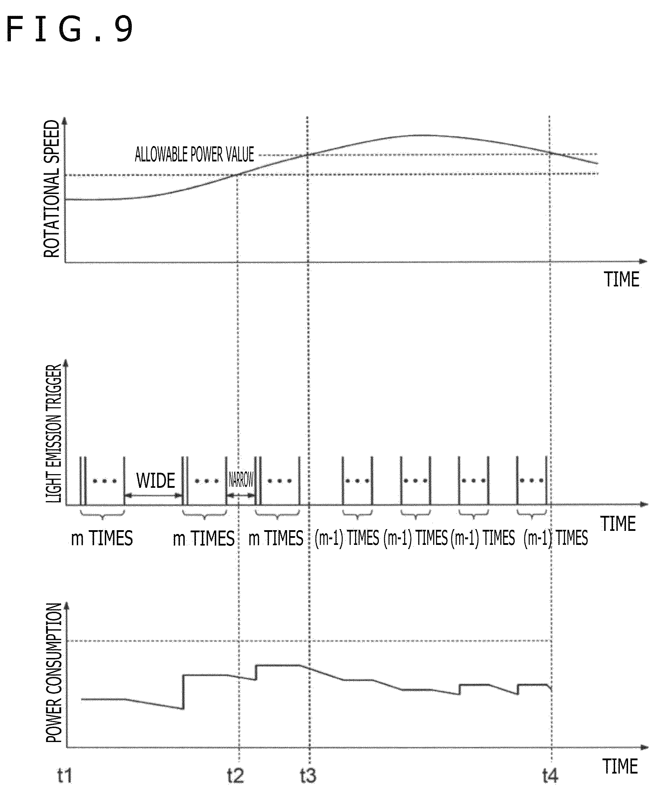

   FIG. 9 is a diagram depicting a relation between a rotational speed of the polygon mirror, a light emission trigger signal, and the power consumption of the light emitting section in a case where the processing in FIG. 8 is performed.
[FIG. 10]

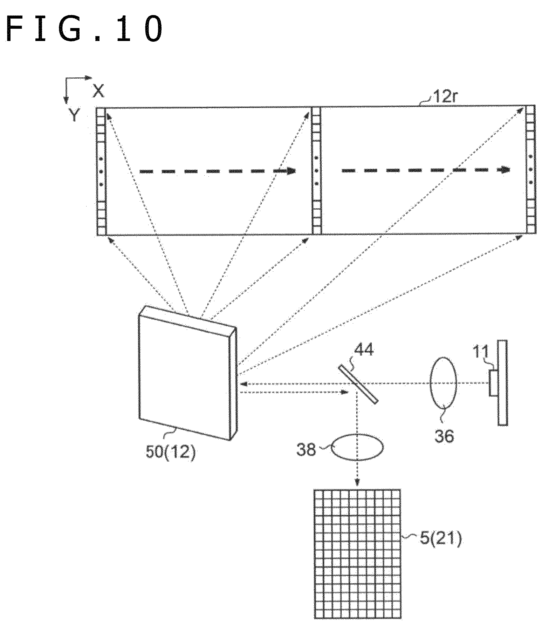

   FIG. 10 is a view depicting an example in which a light pulse signal is used for scanning by a MEMS mirror.
[FIG. 11]

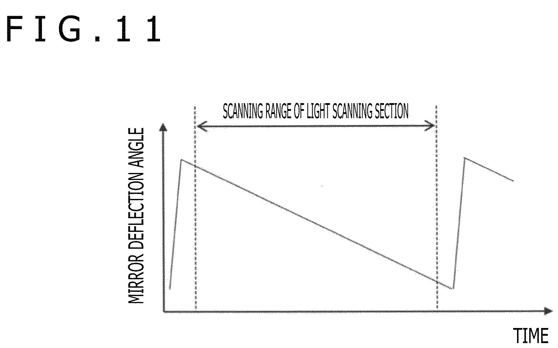

   FIG. 11 is a diagram depicting an example of a driving waveform of the MEMS mirror.
[FIG. 12]

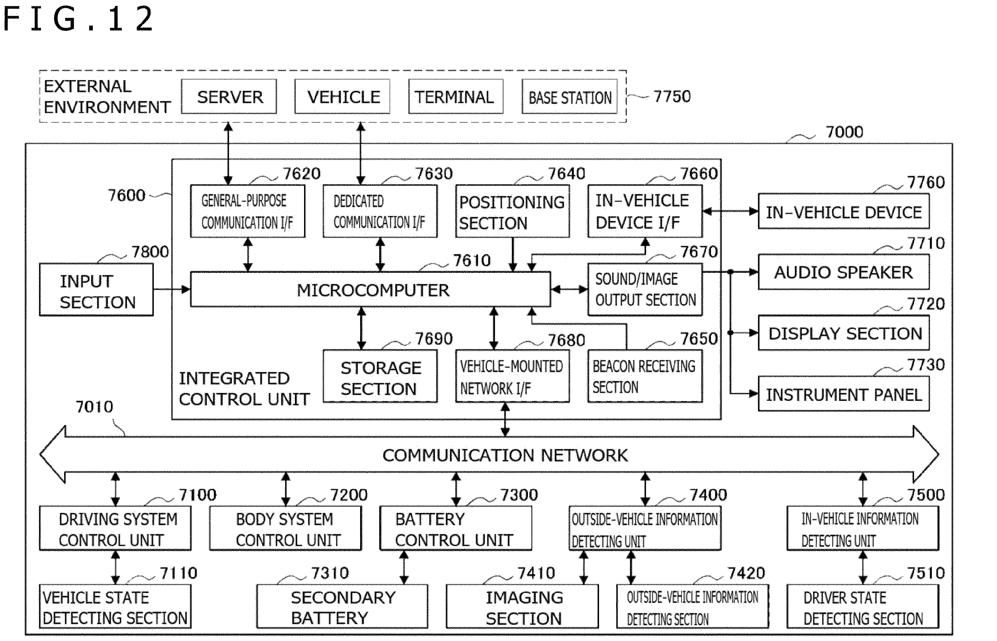

   FIG. 12 is a block diagram depicting an example of schematic configuration of a vehicle control system.
[FIG. 13]

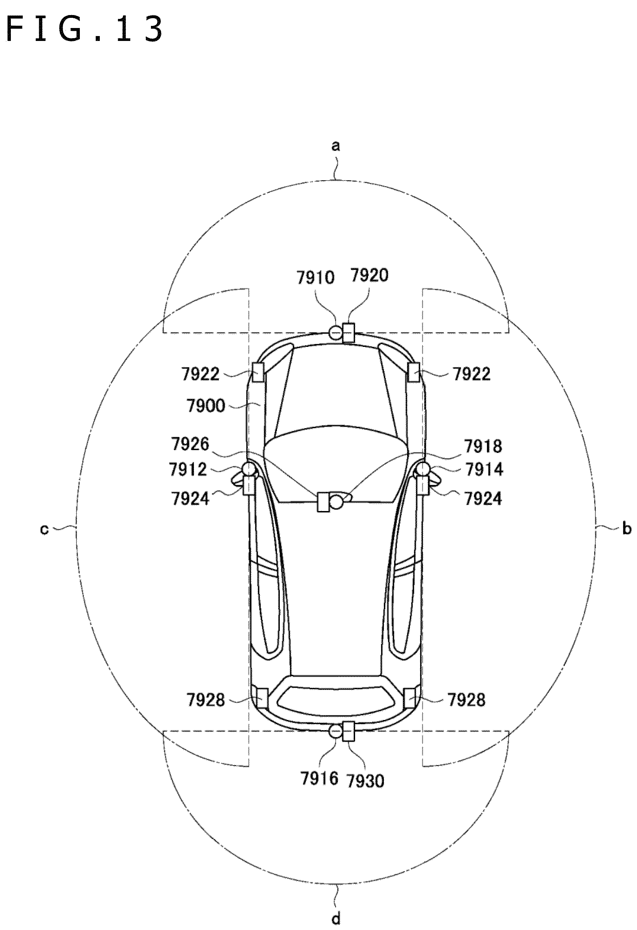

   FIG. 13 is a diagram of assistance in explaining an example of installation positions of an outside-vehicle information detecting section and an imaging section.

### [Description of Embodiment]

In the following, an embodiment of a distance measuring instrument is described with reference to the drawings. Although the following description is given mainly of major components of the distance measuring instrument, the distance measuring instrument may include components or/and functions that are not depicted in the drawings or described herein. The following description does not exclude such components or functions that are not depicted in the drawings or described herein.

FIG. 1 is a block diagram depicting a general configuration of a distance measuring instrument 1 according to an embodiment. The distance measuring instrument 1 of FIG. 1 includes a light emitting section 2, a distance measuring section 3, and an overall controlling section 4. The distance measuring instrument 1 of FIG. 1 performs a distance measuring process by a dToF (direct Time of Flight) method. The distance measuring section 3 includes a light receiving section 5.

The light emitting section 2 includes a plurality of light emitting elements 11, a light scanning section 12, a driving circuit 13, a clock generation section 14, and a light emission controlling section 15.

The plurality of light emitting elements 11 are arranged along a predetermined direction (first direction Y). In the present specification, it is assumed for the convenience of description that the first direction Y is the vertical direction and a second direction X is the horizontal direction. It is to be noted that the first direction Y may otherwise be the horizontal direction and the second direction X may otherwise be the vertical direction. In particular, the plurality of light emitting elements 11 may be arranged in the second direction X (horizontal direction). Alternatively, the plurality of light emitting elements 11 may be arranged in the first direction Y and the second direction X.

The plurality of light emitting elements 11 repetitively emit a light emission pulse signal (Tx pulse signal) at predetermined time intervals. The light emitting section 2 can perform scanning with light signals emitted from the plurality of light emitting elements 11 in the first direction X. A specific method of causing scanning with a light signal does not matter.

The light emitting element 11 is, for example, an EEL (Edge Emitting Laser), a VCSEL (Vertical Cavity Surface Emitting Laser), or a like element, and the number of light emitting elements 11 the light emitting section 2 includes may be any number. In the following, described is an example in which the light emitting section 2 includes a plurality of light emitting elements 11 and the plurality of light emitting elements 11 are arranged in the first direction Y.

The plurality of light emitting elements 11 sequentially emit light one by one at different times. As an alternative, the plurality of light emitting elements 11 may sequentially emit light one by one group of light emitting elements 11 including two or more light emitting elements 11. As another alternative, the plurality of light emitting elements 11 may emit light at the same timing.

The driving circuit 13 drives the plurality of light emitting elements 11 according to a control signal from the light emission controlling section 15. For example, the driving circuit 13 controls the light emission timing of a light pulse signal according to the control signal from the light emission controlling section 15.

The clock generation section 14 generates a clock signal synchronized with a reference clock signal. The reference clock signal is a signal inputted, for example, from the outside of the distance measuring instrument 1. Alternatively, the reference clock signal may be generated in the inside of the distance measuring instrument 1.

The light emission controlling section 15 generates a control signal for controlling the light emission timing of each light emitting element 11 in synchronism with the clock signal. The driving circuit 13 described above drives the plurality of light emitting elements 11 according to the control signal outputted from the light emission controlling section 15.

The light scanning section 12 performs scanning with a light pulse signal emitted from the light emitting section 2, within a predetermined angle range. The light scanning section 12 includes a mechanical scanning mechanism section such as a polygon mirror or a MEMS mirror, and the scanning speed of the light pulse signal is fluctuated by jitter. A specific configuration of the light scanning section 12 is hereinafter described.

The overall controlling section 4 controls the light emitting section 2, light scanning section 12, and distance measuring section 3. The overall controlling section 4 may be integrated with the distance measuring section 3. The overall controlling section 4 includes a determination section 4a. The determination section 4a determines whether or not the scanning speed of the light scanning section 12 has exceeded a predetermined threshold value. The overall controlling section 4 controls the period in which a light pulse signal is to be emitted from the light emitting section 2, in reference to a result of the determination by the determination section 4a. In other words, the overall controlling section 4 controls the number of times by which a light pulse signal is to be emitted from the light emitting section 2 during the scanning period of the light scanning section 12. Further, the overall controlling section 4 controls the light emission timing of the light pulse signal to be emitted by the light emitting section 2, in reference to a result of the determination by the determination section 4a. More particularly, if the determination section 4a determines that the scanning speed has exceeded the predetermined threshold value, then the overall controlling section 4 adjusts the light emission timing of the light pulse signal depending on the scanning speed of the light scanning section 12 and decreases the number of times by which the light pulse signal is to be emitted from the light emitting section 2 during the scanning period of the light scanning section 12 from a reference number of times.

The distance measuring section 3 includes the light receiving section 5 that includes a pixel array section 21, a distance measurement processing section 22, a control section 23, a clock generation section 24, a light emission timing controlling section 25, and a driving circuit 26. The pixel array section 21 configures the light receiving section 5.

The pixel array section 21 includes a plurality of distance measuring pixels 20 arranged in two-dimensional directions. The plurality of distance measuring pixels 20 receive a reflection light signal from an object 10. The plurality of distance measuring pixels 20 output an electric signal depending on a light intensity of the received reflection light signal.

Each of the plurality of distance measuring pixels 20 includes a light receiving element 30. The light receiving element 30 is, for example, an SPAD (Single Photon Avalanche photo Diode) 30. Each distance measuring pixel 20 may include a quench circuit not depicted. The quench circuit supplies, in its initial state, a reverse bias voltage of a potential difference exceeding a breakdown voltage between the anode and the cathode of the SPAD 30. The driving circuit 26 supplies, after the SPAD 30 detects a photon, a reverse bias voltage to the SPAD 30 through the corresponding quench circuit to prepare for detection of a next reflection light pulse signal (Rx pulse signal).

The distance measurement processing section 22 includes a time digital converter (TDC) 31, a histogram generation section 32, a signal processing section 33, and a distance measurement controlling section 34.

The TDC 31 generates a time digital signal depending on a reception time period of a reflection light pulse signal received by the SPAD 30, with a predetermined time resolution. The histogram generation section 32 generates a histogram of a bin width depending on the time resolution of the TDC 31, in reference to the time digital signal generated by the TDC 31. The bin width is a width of each frequency unit configuring the histogram. As the time resolution of the TDC 31 increases, the bin width can be decreased, and a histogram that reflects, with a higher degree of accuracy, the time frequency by which an Rx pulse signal is received is obtained.

The signal processing section 33 includes a distance measurement section 33a. The distance measurement section 33a calculates the distance to the object 10 by calculating the position of the center of gravity of the Rx pulse signal in reference to the histogram or by like means and outputs the distance through an output buffer 35. The signal processing section 33 calculates the time difference between the light emission timings of the plurality of light emitting elements 11 as hereinafter described, and generates, according to the time difference, a correction signal for correcting the time difference in the light emission timings of the plurality of light emitting elements 11.

The control section 23 controls processing operations of the components in the distance measuring section 3. The distance measurement controlling section 34 controls the TDC 31, the histogram generation section 32, and the signal processing section 33 in the distance measurement processing section 22. The light emission timing controlling section 25 controls the light emission controlling section 15 in the light emitting section 2 and controls the driving circuit 26. The driving circuit 26 performs recharge control and so forth for restoring, when any of a plurality of reference pixels 18 and the plurality of distance measuring pixels 20 in the pixel array section 21 detects light and the cathode voltage drops, an original voltage of the cathode voltage.

The clock generation section 24 generates a clock signal that is used by the TDC 31 and the histogram generation section 32. The clock generation section 24 generates a clock signal by using, for example, a PLL circuit not depicted.

FIG. 2 is a perspective view depicting an example of a specific configuration of the light emitting section 2 and depicts an example in which a polygon mirror 41 is used as the light scanning section 12. As depicted in FIG. 2, the polygon mirror 41 is rotatable around an axis of a rotation shaft 42 and is driven to rotate by a motor 43. While the motor 43 rotates the rotation shaft 42 by a rotational speed based on a driving signal from a driving circuit not depicted, the rotational speed of the rotation shaft 42 is fluctuated irregularly by jitter arising from a power supply voltage supplied to the motor 43 and a temperature condition, force applied to the polygon mirror by vibration, acceleration, deceleration, or the like of a moving body in which the measuring instrument is incorporated, and so forth.

The polygon mirror 41 has an outer circumferential face serving as a reflecting mirror face 41m, and a light pulse signal from the light emitting section 2 applied to the reflecting mirror face 41m propagates in a direction that depends on the rotational angle of the reflecting mirror face 41m. In such a manner, the polygon mirror 41 performs scanning with the light pulse signal in a predetermined direction (for example, to the horizontal direction) by successively switching the propagation direction of the light pulse signal from the light emitting section 2 in a period that depends on the rotational speed of the polygon mirror 41.

If the light pulse signal for scanning from the polygon mirror 41 is applied to an object, a reflection light pulse signal of a light intensity that depends on the reflectance of the object is emitted from the object. This reflection light pulse signal is reflected by the polygon mirror 41 and a mirror member 44 and enters the light receiving section 5 through a lens 38 as depicted in FIG. 2. It is to be noted that a reflecting member that reflects the reflection light pulse signal from an object may be provided separately from the polygon mirror 41.

FIG. 3 is a view schematically depicting a scanning range 12r of the light scanning section 12. The scanning range 12r is a two-dimensional region extending in the first direction Y and the second direction X. The first direction Y is a direction in which the plurality of light emitting elements 11 are arranged, and the second direction X is a direction in which the light scanning section 12 performs scanning.

A light pulse signal emitted from the light emitting section 2 passes through a lens 36 and enters the polygon mirror 41, by which the propagation direction thereof is switched such that the light pulse signal is applied to the object 10. A reflection pulse signal from the object 10 irradiated by the light pulse signal is reflected by the polygon mirror 41 and is further reflected by the mirror member 44, whereafter it is received by the light receiving section 5 through the lens 38.

In such a manner, the light scanning section 12 performs scanning with the light pulse signal from the light emitting section 2 along the second direction X. In the present specification, a unit of scanning in the second direction X is referred to as a line. The scanning number (line number) in the second direction X is, for example, several tens to several hundreds. During a period of time in which the light scanning section 12 performs scanning with the light pulse signal for one line, the light emitting section 2 emits a plurality of light pulse signals. In other words, for each line along which the light scanning section 12 performs scanning, a light pulse signal is emitted a plurality of number of times from the light scanning section 12.

The scanning range 12r of the light scanning section 12 depicted in FIG. 3 has, in the first direction Y, the number of pixels that corresponds to the number of the plurality of light emitting elements 11 in the light emitting section 2. As described hereinabove, the plurality of light emitting elements 11 may emit light at the same timing, or the plurality of light emitting elements 11 may emit light sequentially part by part.

FIG. 4 is a timing chart depicting a light emission timing of the light emitting section 2. In FIG. 4, the scanning period in the scanning range 12r of FIG. 3 is referred to as a frame, and the timing at which the light emitting section 2 emits a light pulse signal is referred to as a light emission trigger.

As depicted in FIG. 4, the light scanning section 12 sequentially performs scanning with a light pulse signal for each of the lines lined up in the second direction X in the scanning range 12r during one frame period. The light emitting section 2 emits a light pulse signal a plurality of number of times within one line. More particularly, within one line, all of the light emitting elements 11 in the light emitting section 2 emit light a plurality of number of times at a time.

As described hereinabove, the rotational speed of the polygon mirror 41 is fluctuated by jitter of the motor 43 that drives and rotates the rotation shaft 42. If the rotational speed of the polygon mirror 41 is fluctuated, then the one frame time period of FIG. 4 changes, and also the period of time of one line fluctuates depending on the change of the one frame period. The overall controlling section 4 acquires detection information concerning the rotational speed of the polygon mirror 41 and instructs the light emitting section 2 to emit light at a light emission timing corresponding to the rotational speed of the polygon mirror 41 and further instructs the light emitting section 2 to emit light by the number of times of light emission corresponding to the rotational speed. It is to be noted that, in a case where the light emission timing of a light pulse signal by the light emitting section 2 is not to be adjusted, the overall controlling section 4 need not adjust the number of times by which a light pulse signal is to be emitted from the light emitting section 2.

FIG. 5 is a perspective view depicting a structure of an encoder 45 that detects the rotational speed of the polygon mirror 41. A rotating disk 46 is attached to the rotation shaft 42 of the polygon mirror 41. On an outer circumference side of the rotating disk 46, slits (hereinafter referred to as first slits) 46a are provided at fixed intervals along a circumferential direction. Further, one different slit (hereinafter referred to as a second slit) 46b is provided on the inner side of the rotating disk 46 with respect to the first slits 46a.

A fixed slit plate 47 is arranged at a position overlapping with the first slits 46a and the second slit 46b of the rotating disk 46. Three slits (hereinafter referred to as an A phase slit 47a, a B phase slit 47b, and a Z phase slit 47c) are provided in the fixed slit plate 47. While the rotating disk 46 rotates integrally with the rotation shaft 42, the fixed slit plate 47 is fixed. The interval between the A phase slit 47a and the B phase slit 47b of the fixed slit plate 47 is arranged in a displaced relation from the interval between two adjacent ones of the first slits 46a on the rotating disk 46. When the rotating disk 46 rotates, one of two ones of the first slits 46a of the rotating disk 46 periodically overlaps with the A phase slit 47a of the fixed slit plate 47 while the other one of them periodically overlaps with the B phase slit 47b in a displaced relation by 90 degrees in phase. Meanwhile, the Z phase slit 47c of the fixed slit plate 47 overlaps with the second slit 46b of the rotating disk 46 every time the rotating disk 46 rotates once.

Further, a light source 48 is arranged on the opposite side of the fixed slit plate 47 with the rotating disk 46 interposed therebetween. The light source 48 is, for example, an LED (Light Emitting Device). Further, three light receiving elements (hereinafter referred to as first to third receiving elements) 49a, 49b, and 49c are arranged on the opposite side of the rotating disk 46 with the fixed slit plate 47 interposed therebetween. The first light receiving element 49a receives light having passed through the first slits 46a of the rotating disk 46 and the A phase slit 47a of the fixed slit plate 47 from the light source 48. The second light receiving element 49b receives light having passed through the first slits 46a of the rotating disk 46 and the B phase slit 47b of the fixed slit plate 47 from the light source 48. The third light receiving element 49c receives light having passed through the second slit 46b of the rotating disk 46 and the Z phase slit 47c of the fixed slit plate 47 from the light source 48.

FIG. 6 is a timing chart of a detection signal that depends on the light receiving signals of the first to third light receiving elements 49a, 49b, and 49c. This detection signal is sent from the encoder 45 to the overall controlling section 4.

As depicted in FIG. 6, the light receiving signal (Z phase signal) of the third light receiving element 49c is a signal that outputs one pulse per one rotation of the rotating disk 46. The receiving signal (A phase signal) of the first light receiving element 49a and the receiving signal (B phase signal) of the second light receiving element 49b are pulse signals outputted for every interval between the first slits 46a of the rotating disk 46. The A phase signal and the B phase signal are displaced by 90 degrees in phase from each other, for example.

The overall controlling section 4 detects the rotational speed of the polygon mirror 41 in reference to the A phase signal, the B phase signal, and the Z phase signal outputted from the encoder 45 attached to the polygon mirror 41. Further, the overall controlling section 4 gives an instruction on a light emission timing to the light emitting section 2 in reference to the rotational speed of the polygon mirror 41.

The light emission controlling section 15 in the light emitting section 2 sends a light emission trigger signal to the driving circuit 13 in accordance with the instruction from the overall controlling section 4. The light emission trigger signal has a timing corresponding to the rotational speed of the polygon mirror 41. Hence, if the rotational speed of the polygon mirror 41 fluctuates, the timing of the light emission trigger signal also fluctuates. If the timing of the light emission trigger signal fluctuates, the light emission timing at which the light emitting section 2 emits a light pulse signal also fluctuates. If the light emission timing of the light emitting section 2 fluctuates, the power consumption of the light emitting section 2 fluctuates.

FIG. 7 is a diagram depicting a relation between the rotational speed of the polygon mirror 41, the light emission trigger signal, and the power consumption of the light emitting section 2. FIG. 7 illustrates an example in which, during a period from time t1 to time t2, the rotational speed is equal to or lower than a reference rotational speed, and during a period after time t2, the rotational speed is equal to or higher than the reference rotational speed. Meanwhile, a period from time t3 to time t4 indicates a period of time during which the power consumption of the light emitting section 2 exceeds a predetermined allowable power value.

As depicted in FIG. 7, in a case where the rotational speed of the polygon mirror 41 is equal to or lower than the reference rotational speed (time t1 to time t2), the period of the light emission trigger signal is equal to or shorter than a reference period, and the power consumption of the light emitting section 2 is lower than the allowable power value.

In a case where the rotational speed of the polygon mirror 41 is equal to or higher than the reference rotation (after time t2), the period of the light emission trigger signal is equal to or longer than the reference period, and the power consumption of the light emitting section 2 increases and, in some cases, increases beyond the allowable power value.

Hence, the overall controlling section 4 in the present embodiment determines whether or not the scanning speed has exceeded a predetermined threshold value and controls, in reference to a result of the determination, the period in which a light pulse signal is to be emitted from the light emitting section 2. More particularly, in a case where it is determined that the scanning speed of the light scanning section 12 (for example, the rotational speed of the polygon mirror 41) has exceeded a threshold value, the overall controlling section 4 makes the period in which a light pulse signal is to be emitted longer. In other words, if it is determined that the scanning speed (for example, the rotational speed of the polygon mirror 41) has exceeded the threshold value, the overall controlling section 4 decreases the number of times by which a light pulse signal is to be emitted during the scanning period of the light scanning section 12 from the reference number of times.

FIG. 8 is a flow chart depicting a processing operation of the overall controlling section 4. The processing of the flow chart of FIG. 8 is started when a power supply voltage is supplied to the distance measuring section 3. First, the overall controlling section 4 instructs the light emitting section 2 to emit light (step S1). The light emission controlling section 15 in the light emitting section 2 sends a light emission trigger signal to the driving circuit 13. The driving circuit 13 drives a plurality of light emitting elements 11 at the timing of the light emission trigger signal, and the plurality of light emitting elements 11 emit a light pulse signal. Further, the light scanning section 12 performs scanning with the light pulse signal emitted from the light emitting section 2, in the second direction X. In the initial state, the light emitting section 2 emits a light pulse signal by a reference number of times determined in advance, during a scanning period of the light scanning section 12. When an object is irradiated with the light pulse signal for scanning, then a reflection light pulse signal of a light intensity corresponding to the reflectance of the object is received by the light receiving section 5.

The encoder 45 attached to the polygon mirror 41 in the light scanning section 12 outputs an A phase signal, a B phase signal, and a Z phase signal as described hereinabove. The overall controlling section 4 receives the A phase signal, B phase signal, and Z phase signal outputted from the encoder 45 (step S2).

The rotational speed of the rotation shaft 42 is fluctuated by jitter and various kinds of noise. Especially, the mechanical accuracy of each slit of the encoder 45 is not sufficient for required detection accuracy for the rotational speed. Such factors as thus mentioned fluctuate the A phase signal, the B phase signal, and the Z phase signal to be outputted from the encoder 45. Hence, by receiving the A phase signal, the B phase signal, and the Z phase signal outputted from the encoder 45 over a plurality of scanning periods of the light scanning section 12 and calculating an average value of them, the influence by the noise can be cancelled.

Next, the overall controlling section 4 detects the scanning speed of the light scanning section 12 (for example, the rotational speed of the polygon mirror 41) in reference to the averaged A phase signal, B phase signa, and Z phase signal (step S3).

Subsequently, the overall controlling section 4 determines whether or not the scanning speed of the light scanning section 12 (for example, the rotational speed of the polygon mirror 41) has exceeded a predetermined threshold value (step S3). The predetermined threshold value is set in advance taking a case in which the power consumption of the light emitting section 2 has exceeded an allowable power value into consideration.

When it is determined in step S4 that the scanning speed of the light scanning section 12 has exceeded the predetermined threshold value, then the overall controlling section 4 sets the number of times of light emission of a light pulse signal during the scanning period of the light scanning section 12 to a number smaller than the reference number of times (step S5). For example, when it is assumed that the reference number of times is m (m is an integer equal to or greater than 2), then the overall controlling section 4 sets the number of times of light emission to a number smaller than m. On the other hand, in a case where the scanning speed of the light scanning section 12 is equal to or smaller than the predetermined threshold value, the overall controlling section 4 keeps the number of times of light emission of a light pulse signal during the scanning period of the light scanning section 12 set to the reference number of times.

In a case where the process in step S5 ends, the overall controlling section 4 instructs the light emitting section 2 to emit light by the number of times of light emission set in step S5 (step S6). The light emission controlling section 15 in the light emitting section 2 sends a light emission trigger signal to the driving circuit in accordance with the instruction in step S6. The driving circuit drives a plurality of light emitting elements 11 at the timing of the light emission trigger signal. Consequently, each of the light emitting elements 11 emits a light pulse signal by the number of times of light emission set by the overall controlling section 4 during the scanning period of the light scanning section 12.

Although, in the flow chart of FIG. 8, the number of times of light emission within the scanning period is switched between two different number of times depending upon whether or not the scanning speed of the light scanning section 12 has exceeded the threshold value, the scanning speed of the light scanning section 12 may be compared otherwise with two or more threshold values such that the number of times of light emission time of a light pulse signal during the scanning period is switched among three or more options for the number of times of light emission.

FIG. 9 is a diagram depicting a relation between the rotational speed of the polygon mirror 41, the light emission trigger signal, and the power consumption of the light emitting section 2 in a case where the processing of FIG. 8 is performed. FIG. 9 depicts an example in which the rotational speed of the polygon mirror 41 changes, similarly to FIG. 7. Although, in FIG. 7, the number of times of light emission of a light pulse signal during the scanning period of the light scanning section 12 is the same even if the rotational speed of the polygon mirror 41 changes, in FIG. 9, if the rotational speed exceeds the predetermined threshold value in association with the processing of the flow chart of FIG. 8, then the number of times of light emission is decreased from the reference number of times. Consequently, even if the rotational speed of the polygon mirror 41 increases, the power consumption of the light emitting section 2 does not increase, the operation of the light emitting section 2 can be stabilized, and the life of the light emitting section 2 can also be elongated.

Although the example described hereinabove is directed to an example in which the light scanning section 12 is the polygon mirror 41, the light scanning section 12 can be applied to various mechanical scanning mechanism sections that are influenced by jitter, other than the polygon mirror 41. One example of the type of the mechanical scanning mechanism section is a MEMS mirror.

FIG. 10 is a view depicting an example in which a MEMS mirror 50 performs scanning with a light pulse signal, and FIG. 11 is a diagram depicting an example of a driving waveform for the MEMS mirror 50. In FIG. 11, the axis of abscissa indicates time, and the axis of ordinate indicates the deflection angle of the MEMS mirror 50.

The MEMS mirror 50 has a very small rotatable mirror arranged on a board, and allows reduction in size and cost and also allows reduction of the power consumption compared to the polygon mirror 41. The MEMS mirror 50 not only can be driven with a driving signal of such a saw-tooth wave as depicted in FIG. 11 but also can be driven with a driving signal of any form such as a sine wave or a triangle wave. It is desirable to drive the MEMS mirror 50 within a region within which the rotational angle of the MEMS mirror 50 changes linearly with respect to a change of the signal level of the driving signal (period of time between two broken lines in FIG. 11). However, depending upon a type of the MEMS mirror 50 or an environmental condition, the rotational angle sometimes changes non-linearly with respect to the signal level of the driving signal for the MEMS mirror 50. In this case, a characteristic of the deflection angle may be measured and stored in advance such that the line starting timing of the light scanning section 12 is determined according to the stored characteristic. Alternatively, angle information may be outputted from the MEMS mirror 50 such that the line starting timing is determined in reference to the outputted angle information.

Although, in the flow chart of FIG. 8, only the determination process regarding whether or not the scanning speed of the light scanning section 12 has exceeded the threshold value therefor is performed, a different determination process regarding whether or not the scanning speed of the light scanning section 12 has changed to a value equal to or lower than a threshold value for a lower limit may be provided. Then, if it is determined that the scanning speed of the light scanning section 12 has changed to a value equal to or lower than the threshold value for a lower limit, then the number of times of light emission of a light pulse signal during the scanning period of the light scanning section 12 may be increased from the reference number of times. By increasing the number of times of light emission, measurement to a farther distance can be performed.

As described above, since, in the present embodiment, whether or not the scanning speed of the light scanning section 12 has exceeded the predetermined threshold value is determined and the period in which a light pulse signal is to be emitted from the light emitting section 2 is controlled in reference to a result of the determination, the power consumption of the light emitting section 2 is less likely to exceed the allowable power value, the light emitting operation of the light emitting section 2 can be stabilized, and the life of the light emitting section 2 can be elongated.

### <<Application Example>>

The technology according to the present disclosure can be applied to various products. For example, the technology according to the present disclosure may be implemented as an apparatus that is incorporated in a moving body of any of various types such as an automobile, an electric automobile, a hybrid electric automobile, a motor cycle, a bicycle, a personal mobility, an airplane, a drone, a ship, a robot, a construction machine, and agricultural machinery (tractor).

FIG. 12 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 12, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 12 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

FIG. 13 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 13 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 12, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 12, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 12 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

It is to be noted that a computer program for implementing the functions of the distance measuring instrument 1 according to the present embodiment described hereinabove with reference to FIG. 1 and so forth can be incorporated into any of the control units and so forth. Also, it is possible to provide a computer-readable recording medium in which such a computer program as just described is recorded. The recording medium is, for example, a magnetic disk, an optical disk, a magneto-optical disk, or a flash memory. Further, the computer program described above may be delivered, for example, through a network without using the recording medium.

In the vehicle control system 7000 described above, the distance measuring instrument 1 according to the present embodiment described hereinabove with reference to FIG. 1 and so forth can be applied to the integrated control unit 7600 of the application example depicted in FIG. 12.

Further, at least some of the components of the distance measuring instrument 1 described hereinabove with reference to FIG. 1 and so forth may be implemented in a module for the integrated control unit 7600 depicted in FIG. 12 (for example, in an integrated circuit module configured by one die). Alternatively, the distance measuring instrument 1 described with reference to FIG. 1 may be implemented by a plurality of control units of the vehicle control system 7000 depicted in FIG. 12.

Note that the present technology can also take the following configurations.
(1) A distance measuring instrument including:
   a light emitting section that periodically emits a light pulse signal;
   a light scanning section that performs scanning with the light pulse signal within a predetermined angle range;
   a scanning speed detection section that detects a scanning speed of the light scanning section;
   a determination section that determines whether or not the scanning speed has exceeded a predetermined threshold value; and
   a control section that controls the number of times by which the light pulse signal is to be emitted from the light emitting section within a scanning period of the light scanning section, in reference to a result of the determination of the determination section.
(2) The distance measuring instrument according to (1), in which, in a case where it is determined that the scanning speed has exceeded the threshold value, the control section decreases the number of times by which the light pulse signal is to be emitted from the light emitting section during a scanning period of the light scanning section from a reference number of times.
(3) The distance measuring instrument according to (2), in which the light scanning section includes a rotation mirror member that performs scanning with the light pulse signal in an angular direction that depends on a rotational angle,
   the scanning speed detection section detects a rotational speed of the rotation mirror member,
   the determination section determines whether or not the rotational speed has exceeded the predetermined threshold value, and
   the control section makes, if it is determined that the rotational speed has exceeded the threshold value, the number of times by which the light pulse signal is emitted while the rotation mirror member rotates once smaller than the reference number of times.
(4) The distance measuring instrument according to (3), in which the rotation mirror member includes
   a rotatable mirror,
   a rotation shaft of the rotatable mirror, and
   a motor for driving the rotation shaft to rotate, and
   the scanning speed detection section detects the rotational speed of the rotation shaft.
(5) The distance measuring instrument according to (4), in which the scanning speed detection section includes an encoder that detects the rotational speed of the rotation shaft.
(6) The distance measuring instrument according to any one of (1) through (5), in which the light emitting section includes a plurality of light emitting elements arranged along a predetermined direction,
   the plurality of light emitting elements sequentially emit the light pulse signal one by one at different times, and
   the control section controls, in reference to a result of the determination by the determination section, the number of times by which the plurality of light emitting elements repeat an operation of sequentially emitting the light pulse signal one by one at different times during a scanning period of the light scanning section.
(7) The distance measuring instrument according to (6), in which the plurality of light emitting elements are arranged along a first direction,
   the light scanning section scans with the light pulse signal in a second direction crossing with the first direction,
   the light emitting section causes the plurality of light emitting elements to emit light a plurality of number of times every time the light scanning section performs scanning with the light pulse signal by one unit in the second direction, and
   the control section controls, in reference to a result of the determination by the determination section, the number of times by which, every time the light scanning section performs scanning with the light pulse signal by one unit in the second direction, the light emitting section causes the plurality of light emitting elements to emit light.
(8) The distance measuring instrument according to any one of (1) through (5), in which the light emitting section includes a plurality of light emitting elements arranged along a predetermined direction,
   the plurality of light emitting elements emit the light pulse signal at a same timing, and
   the control section controls, in reference to a result of the determination by the determination section, the number of times by which the plurality of light emitting elements repeat an operation of emitting the light pulse signal during a scanning period of the light scanning section.
(9) The distance measuring instrument according to any one of (1) through (8), in which the control section controls the number of times by which the light emitting section emits the light pulse signal during a scanning period of the light scanning section, such that power consumption of the light emitting section does not exceed an allowable power value determined in advance.
(10) The distance measuring instrument according to any one of (1) through (9), in which the light scanning section includes a mechanical section in which the scanning speed of the light pulse signal is fluctuated by jitter.
(11) The distance measuring instrument according to (10), in which the light scanning section includes a polygon mirror or a MEMS (Micro Electro Mechanical System) mirror.
(12) The distance measuring instrument according to any one of (1) through (11), further including:
   a light receiving section that receives a reflection light pulse signal reflected by an object that is irradiated by the light pulse signal; and
   a distance measurement section that measures a distance to the object according to a time difference between a light reception timing of the reflection light pulse signal received by the reception section and a light emission timing of the light pulse signal emitted from the light emitting section.
(13) The distance measuring instrument according to any one of (1) through (12), in which the control section controls the light emission timing of the light pulse signal to be emitted from the light emitting section, in reference to a result of the determination by the determination section.
(14) The distance measuring instrument according to (13), in which, if it is determined by the determination section that the scanning speed has exceeded the predetermined threshold value, then the control section adjusts the light emission timing of the light pulse signal depending on the scanning speed of the light scanning section and makes the number of times by which the light pulse signal is to be emitted from the light emitting section during a scanning period of the light scanning section smaller than a reference number of times.
(15) A distance measuring method including:
   scanning, by a light scanning section, with a light pulse signal emitted periodically from a light emitting section, within a predetermined angular range;
   detecting a scanning speed of the light scanning section;
   determining whether or not the scanning speed has exceeded a predetermined threshold value; and
   controlling the number of times by which the light pulse signal is to be emitted from the light emitting section within a scanning period of the light scanning section in reference to a result of determining whether or not the scanning speed has exceeded a predetermined threshold value.

The mode of the present disclosure is not limited to the individual embodiment described above and includes various modifications with which a person skilled in the art can come up, and also advantageous effects of the present disclosure are not restricted to the contents described above. In other words, it is possible to perform various additions, alterations, and partial omissions without departing from the conceptive ideas and subject matters of the present disclosure derived from the contents defined in the claims and equivalents to them.

### [Reference Signs List]

1: Distance measuring instrument
2: Light emitting section
3: Distance measuring section
4: Overall controlling section
5: Light receiving section
10: Object
11: Light emitting element
12: Light scanning section
12r: Scanning range
13: Driving circuit
14: Clock generation section
15: Light emission controlling section
18: Reference pixel
20: Distance measuring pixel
21: Pixel array section
22: Distance measurement processing section
23: Control section
24: Clock generation section
25: Light emission timing controlling section
26: Driving circuit
30: Light receiving element
31: Time digital converter (TDC)
32: Histogram generation section
33: Signal processing section
33a: Distance measurement section
34: Distance measurement controlling section
35: Output buffer
36: Lens
38: Lens
41: Polygon mirror
41m: Reflecting mirror face
42: Rotation shaft
43: Motor
44: Mirror member
45: Encoder
46: Rotating disk
46a: First slit
46b: Second slit
47: Fixed slit plate
47a: A phase slit
47b: B phase slit
47c: Z phase slit
48: Light source
49a: First light receiving element
49b: Second light receiving element
49c: Third light receiving element
50: MEMS mirror

## Claims

1. A distance measuring instrument comprising:
a light emitting section that periodically emits a light pulse signal;
a light scanning section that performs scanning with the light pulse signal within a predetermined angle range;
a scanning speed detection section that detects a scanning speed of the light scanning section;
a determination section that determines whether or not the scanning speed has exceeded a predetermined threshold value; and
a control section that controls the number of times by which the light pulse signal is to be emitted from the light emitting section within a scanning period of the light scanning section, in reference to a result of the determination of the determination section.

2. The distance measuring instrument according to claim 1, wherein, in a case where it is determined that the scanning speed has exceeded the threshold value, the control section decreases the number of times by which the light pulse signal is to be emitted from the light emitting section during a scanning period of the light scanning section from a reference number of times.

3. The distance measuring instrument according to claim 2, wherein the light scanning section includes a rotation mirror member that performs scanning with the light pulse signal in an angular direction that depends on a rotational angle,
the scanning speed detection section detects a rotational speed of the rotation mirror member,
the determination section determines whether or not the rotational speed has exceeded the predetermined threshold value, and
the control section makes, if it is determined that the rotational speed has exceeded the threshold value, the number of times by which the light pulse signal is emitted while the rotation mirror member rotates once smaller than the reference number of times.

4. The distance measuring instrument according to claim 3, wherein the rotation mirror member includes
a rotatable mirror,
a rotation shaft of the rotatable mirror, and
a motor for driving the rotation shaft to rotate, and
the scanning speed detection section detects the rotational speed of the rotation shaft.

5. The distance measuring instrument according to claim 4, wherein the scanning speed detection section includes an encoder that detects the rotational speed of the rotation shaft.

6. The distance measuring instrument according to claim 1, wherein the light emitting section includes a plurality of light emitting elements arranged along a predetermined direction,
the plurality of light emitting elements sequentially emit the light pulse signal one by one at different times, and
the control section controls, in reference to a result of the determination by the determination section, the number of times by which the plurality of light emitting elements repeat an operation of sequentially emitting the light pulse signal one by one at different times during a scanning period of the light scanning section.

7. The distance measuring instrument according to claim 6, wherein the plurality of light emitting elements are arranged along a first direction,
the light scanning section scans with the light pulse signal in a second direction crossing with the first direction,
the light emitting section causes the plurality of light emitting elements to emit light a plurality of number of times every time the light scanning section performs scanning with the light pulse signal by one unit in the second direction, and
the control section controls, in reference to a result of the determination by the determination section, the number of times by which, every time the light scanning section performs scanning with the light pulse signal by one unit in the second direction, the light emitting section causes the plurality of light emitting elements to emit light.

8. The distance measuring instrument according to claim 1, wherein the light emitting section includes a plurality of light emitting elements arranged along a predetermined direction,
the plurality of light emitting elements emit the light pulse signal at a same timing, and
the control section controls, in reference to a result of the determination by the determination section, the number of times by which the plurality of light emitting elements repeat an operation of emitting the light pulse signal during a scanning period of the light scanning section.

9. The distance measuring instrument according to claim 1, wherein the control section controls the number of times by which the light emitting section emits the light pulse signal during a scanning period of the light scanning section, such that power consumption of the light emitting section does not exceed an allowable power value determined in advance.

10. The distance measuring instrument according to claim 1, wherein the light scanning section includes a mechanical section in which the scanning speed of the light pulse signal is fluctuated by jitter.

11. The distance measuring instrument according to claim 10, wherein the light scanning section includes a polygon mirror or a MEMS (Micro Electro Mechanical System) mirror.

12. The distance measuring instrument according to claim 1, further comprising:
a light receiving section that receives a reflection light pulse signal reflected by an object that is irradiated by the light pulse signal; and
a distance measurement section that measures a distance to the object according to a time difference between a light reception timing of the reflection light pulse signal received by the reception section and a light emission timing of the light pulse signal emitted from the light emitting section.

13. The distance measuring instrument according to claim 1, wherein the control section controls the light emission timing of the light pulse signal to be emitted from the light emitting section, in reference to a result of the determination by the determination section.

14. The distance measuring instrument according to claim 13, wherein, if it is determined by the determination section that the scanning speed has exceeded the predetermined threshold value, then the control section adjusts the light emission timing of the light pulse signal depending on the scanning speed of the light scanning section and makes the number of times by which the light pulse signal is to be emitted from the light emitting section during a scanning period of the light scanning section smaller than a reference number of times.

15. A distance measuring method comprising:
scanning, by a light scanning section, with a light pulse signal emitted periodically from a light emitting section, within a predetermined angular range;
detecting a scanning speed of the light scanning section;
determining whether or not the scanning speed has exceeded a predetermined threshold value; and
controlling the number of times by which the light pulse signal is to be emitted from the light emitting section within a scanning period of the light scanning section in reference to a result of determining whether or not the scanning speed has exceeded a predetermined threshold value.
